# EUROPÄISCHE PATENTSCHRIFT

(11) **EP 1 694 947 B1**
(45) Veröffentlichungstag und Bekanntmachung des Hinweises auf die Patenterteilung: **15.12.2010**
(21) Anmeldenummer: 04802655.3
(22) Anmeldetag: 28.10.2004
(51) Int. Cl.: F01N 9/00, B21D 47/00

(54) **ELEKTROBLECHE MIT ABSTANDSSTREIFEN UND ENTSPRECHENDES HERSTELLUNGSVERFAHREN**
MAGNETIC SHEET STEEL COMPRISING A SPACER STRIP AND A CORRESPONDING PRODUCTION METHOD
TOLES ELECTRIQUES POURVUES DE BANDES D'ESPACEMENT ET PROCEDE DE FABRICATION ASSOCIE

(43) Veröffentlichungstag der Anmeldung: 30.08.2006
(73) Patentinhaber: SIEMENS AKTIENGESELLSCHAFT, 80333 München (DE)
(72) Erfinder: JESKE, Rainer, 91315 Höchstadt/A. (DE)
(86) Internationale Anmeldenummer: PCT/DE2004/002405
(87) Internationale Veröffentlichungsnummer: WO 2006/045260

(56) Entgegenhaltungen:
- EP-A- 0 743 430
- US-A- 3 981 381
- US-A- 4 647 435
- US-A- 5 094 074

## Beschreibung

Die vorliegende Erfindung beschreibt ein Herstellungsverfahren für ein Elektroblech mit mindestens einem Abstandsstreifen durch Heraustrennen von Blechstücken aus einem Blech zur Festlegung einer inneren Umrandung und einer äußeren Umrandung des Elektroblechs. Darüber hinaus wird ein Elektroblech mit mindestens einem Abstandsstreifen vorgestellt.

Um die beim Betreiben eines Motors entstehende Wärme abzuführen, werden für die Radialbelüftung Elektrobleche mit Abstandsstreifen verwendet, welche in definierten Abständen zueinander zwischen Elektroblechen ohne Abstandsstreifen angeordnet werden. Die Abstandsstreifen dienen dabei zur Einhalt tung eines bestimmten Abstandes zwischen dem Elektroblech mit den Abstandssteifen und einem daneben angeordneten Elektroblech. Dies führt zur Schaffung von Freiräumen zwischen den Elektroblechen und ermöglicht damit einen Luftstrom zur Kühlung des Motors.

Um ein Elektroblech mit Abstandsstreifen herzustellen, wird nach dem Stand der Technik erst die äußere Umrandung und die innere Umrandung des Elektroblechs aus einem Blech herausgestanzt oder mittels eines fokussierten Laserstrahls herausgebrannt. In einem weiteren Arbeitsgang werden die zuvor in einem getrennten Verfahren aus einem Blech herausgestanzten Abstandsstreifen durch Punktschweißverfahren auf dem Elektroblech lotrecht angebracht.

Dieses Herstellungsverfahren ist relativ zeitaufwändig und verursacht damit hohe Kosten.

Dokument US5094074 offenbart ein katalytischer Konverter für Reinigerabgas von einem Automobilfahrzeugmotor. Der katalytische Konverter besteht aus einer metallischen Fördermaschine für Katalysatormetall, abgeschaffen innerhalb eines Gehäuses. Die metallische Fördermaschine wird aus einer Hauptblechstruktur konstruiert, die gebildet wird, indem man herauf ein verlängertes flaches Blech in einer Zickzackweise im Querschnitt sich dreht, damit die Hauptblechstruktur eine Mehrzahl der parallelen flachen Teile hat. Die angrenzenden flachen Teile defninieren einen Raum..

Die Aufgabe der vorliegenden Erfindung liegt deshalb darin, ein weniger zeitaufwändiges und billigeres Herstellungsverfahren zu finden.

Erfindungsgemäß wird diese Aufgabe gelöst durch ein Herstellungsverfahren für ein Elektroblech mit mindestens einem Abstandsstreifen durch Heraustrennen von Blechstücken aus einem Blech zur Festlegung einer äußeren und inneren Umrandung des Elektroblechs, sowie durch Erzeugen von mindestens einer sogenannten Schnittlinie in dem Blech, welche eine Kontur des mindestens einen Abstandsstreifens festlegt und Herausbiegen des Abstandsstreifens aus der Hauptebene des Elektroblechs. Dabei durchschneidet die Schnittlinie das Blech vollständig.

Darüber hinaus beschreibt die Erfindung ein Elektroblech mit mindestens einem Abstandsstreifen, wobei mindestens eine Schnittlinie, welche die Kontur des mindestens einen Abstandsstreifens festlegt, in dem Elektroblech ausgebildet ist und der mindestens eine Abstandsstreifen aus der Hauptebene des Elektroblechs herausgebogen ist.

Der Vorteil des vorgestellten Herstellungsverfahrens liegt darin, dass es eine einfachere und billigere Herstellung von Elektroblechen mit Abstandsstreifen erlaubt. Dabei liegt der Erfindung die Erkenntnis zugrunde, dass es die Verschiedenartigkeit der Arbeitsgänge wie Stanzen und Schweißen ist, welche das Herstellungsverfahren nach dem Stand der Technik relativ zeitaufwändig, kompliziert und damit teuer gestaltet. Da mit dem Herstellungsverfahren der vorliegenden Erfindung der Vorgang des Schweißens entfällt, können hierbei Zeit und Kosten eingespart werden. Des Weiteren führt das Anschweißen der Abstandsstreifen an einem Elektroblech oft zu einer mangelhaften Befestigung der Abstandsstreifen, die damit relativ wenig belastbar in Bezug auf den auf sie ausgeübten Druck sind. Dies birgt das Risiko, dass bei einem zu hohen Druck die Abstandsstreifen vom Elektroblech abbrechen. Über das vorgestellte Herstellungsverfahren können hingegen Elektrobleche mit Abstandsstreifen gewonnen werden, die einen auf sie ausgeübten Druck besser standhalten.

Vorteilhafterweise kann die mindestens eine Schnittlinie in dem Blech so ausgebildet sein, dass der mindestens eine Abstandsstreifen über einen als Biegelinie bezeichneten Abschnitt mit dem Elektroblech verbunden bleibt und eine der Biegelinie gegenüber liegende Kontaktlinie an dem Abstandsstreifen entsteht und wobei die Kontaktlinie länger als die Biegelinie des mindestens einen Abstandsstreifen ist. Dies ermöglicht eine erhöhte Auflagefläche, zu der sich die Kontaktlinien der einzelnen Abstandsstreifen eines Elektroblechs aufaddieren. Damit ist eine Abdeckung der gesamten Fläche eines daneben angeordneten Elektrobleches gewährleistet, was die Stabilität des eingehaltenen Abstands zwischen dem Elektroblech mit den Abstandsstreifen und dem daneben angeordneten Elektroblech erhöht.

Vorzugsweise können Schnittlinien zur Festlegung der Konturen mehrerer Abstandsstreifen auf dem Blech so angebracht werden, dass sich die Kontaktlinien in unterschiedlichen Richtungen zu den Biegelinien der zugehörigen Abstandsstreifen befinden. Die Abstandsstreifen eines Elektroblechs werden dadurch wechselseitig in einer Links- oder Rechtsdrehung aus der Hauptebene des Elektroblechs herausgebogen. Dabei gewährleistet das wechselseitige Herausbiegen aus der Hauptebene eine bessere Stabilität gegenüber dem auf die Abstandsstreifen wirkenden Druck, als dies bei einem einseitigen Herausbiegen der Fall ist.

Die vorliegende Erfindung wird nun anhand der beigefügten Zeichnungen näher erläutert, in denen zeigen:
- FIG 1: ein erfindungsgemäßes Läuferblech mit Abstandsstrei- fen; und
- FIG 2: ein erfindungsgemäßes Elektroblech mit verschiedenen Formen von Abstandsstreifen;

Die nachfolgend näher beschriebenen Ausführungsbeispiele stellen bevorzugte Ausführungsformen der vorliegenden Erfindung dar.

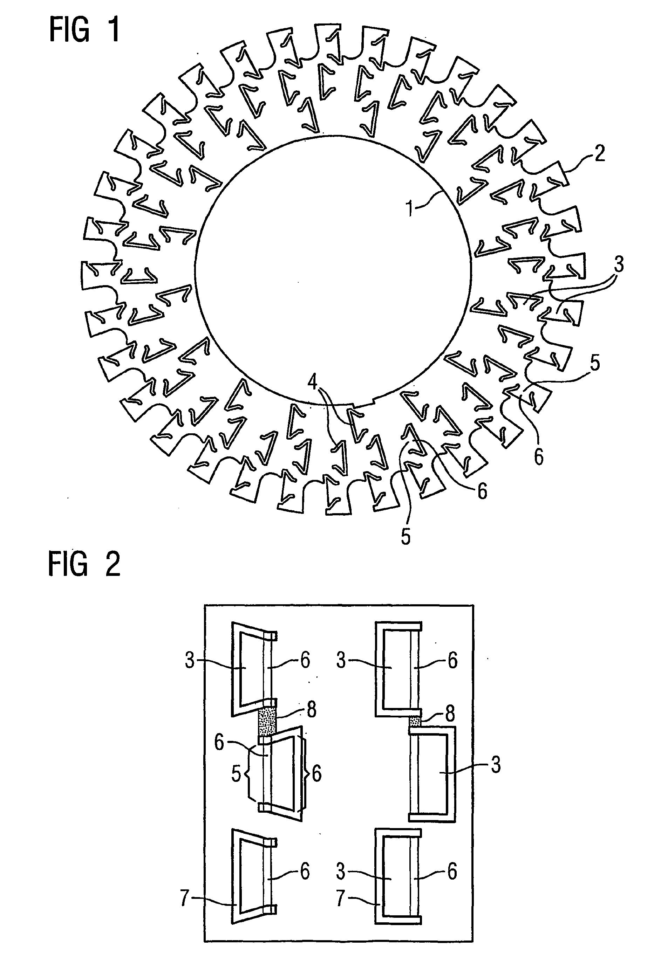

Für FIG 1 wurde als Beispiel für ein erfindungsgemäßes Elektroblech ein Läuferblech eines Motors mit Abstandsstreifen 3 gewählt. Dabei ist dies nur ein Beispiel für ein Elektroblech, auf das sich die vorliegende Erfindung anwenden lässt. Daneben bieten sich als Nutzungsbeispiele der Erfindung aber auch andere Elektrobleche von Motoren, Generatoren, Transformatoren und dergleichen an.

Das dargestellte Läuferblech aus FIG 1 umfasst eine innere Umrandung 1, eine äußere Umrandung 2 sowie die Schnittlinie 4. Die Umrandungen 1 und 2 können durch Herausbrennen mit fokussiertem Laserstrahl aus einem Blech gewonnen werden. Mit dem Laserbrennverfahren lassen sich feinere Konturen erzielen. Die Schnittlinie 4 kann durch Herausstanzen oder ebenfalls mit dem Laserbrennverfahren gewonnen werden. Stanzen ist gegenüber dem Laserverfahren das schnellere Verfahren. Es ist deshalb sinnvoll zur Herstellung eines Motorbleches wie aus FIG 1 eine Maschine zu verwenden, die sowohl über eine Stanz- und Biegeeinrichtung, als auch über eine Laserbrenneinrichtung verfügt.

Über die Schnittlinien 4 werden die Konturen der Abstandsstreifen 3 festgelegt. Dabei wird bei dem Anbringen der Schnittlinien 4 nicht nur die Oberfläche des Bleches geritzt, sondern die Schnitte der Schnittlinie 4 führen durch das Blech hindurch. Die Schnittlinien 4 können auch durch Ausstanzen jeweils eines schmalen Blechstreifens erzeugt werden, wie dies in FIG 1 angedeutet ist.

Das Ausbilden der Schnittlinien 4 kann entweder vor oder nach dem Ausbilden der inneren und der äußeren Umrandung 1 und 2 durchgeführt werden. Eine weitere Möglichkeit ist das gleichzeitige Herstellen der inneren und der äußeren Umrandungen 1 und 2 mit den Schnittlinien 4 für die Abstandsstreifen 3.

Es ist erfindungsgemäß vorgesehen, die Schnittlinien 4 für die Abstandsstreifen 3 auf dem Blech so anzubringen, dass die Abstandsstreifen 3 mit dem Motorblech über einen als Biegelinie 5 bezeichneten Abschnitt noch verbunden bleiben. Bei dem Blech aus FIG 1 wurde dies so durchgeführt. Dies erspart ein Schweißverfahren zum Anbringen der Abstandsstreifen 3 an dem Motorblech. Des Weiteren müssen die Schnittlinien 4 so an dem Blech angebracht werden, dass je ein Teilabschnitt der Abstandsstreifen 3 vom Motorblech getrennt ist und sich damit leicht aus der Hauptebene des Motorblechs herausbiegen lässt. Dieser Biegeschritt kann von der gleichen Maschine durchgeführt werden, die auch das Stanzen oder Laserbrennen zum Erzeugen der Schnittlinien 4 für die Abstandsstreifen ausführt.

Bei Anordnen eines weiteren Motorblechs ohne Abstandsstreifen 3 neben dem Motorblech mit den Abstandsstreifen 3, berührt ein Teil von je einem Abstandsstreifen 3 das daneben angeordnete Motorblech. Dieser Teil des Abstandsstreifens 3 wird im Weiteren als Kontaktlinie 6 bezeichnet.

Je nach Wahl für die Schnittlinien 4 können unterschiedliche Konturen für die Abstandsstreifen 3 festgelegt werden. Beispielsweise können die Schnittlinien 4 auf einem Motorblech so angebracht werden, dass die Abstandsstreifen 3 rechteckig geformt sind, wie dies in FIG 2 an den drei Abstandsstreifen 3 rechts zu erkennen ist.

Vorteilhafter ist es allerdings, die Freistanzungen 7 so an dem Motorblech anzubringen, dass die Abstandsstreifen 3 v-förmig geformt sind, wie dies für die drei Abstandsstreifen 3 links in FIG 2 durchgeführt wurde. Bei diesen Abstandsstreifen 3 ist die Kontaktlinie 6 je eines Abstandsstreifens 3 länger als die zugehörige Biegelinie 5 des Abstandsstreifens 3. Um dies klarer zu verdeutlichen, wurden die Abstandsstreifen 3 sowohl in die Hauptebene des Motorbleches hineinprojiziert, als auch aus der Hauptebene herausgebogen, in FIG 2 skizziert. Da die herausgebogenen Abstandsstreifen 3 um einen Winkel von ungefähr 90° gebogen wurden, erkennt man in diesem Fall in FIG 2 nur die als Kontaktlinie 6 bezeichnete Region eines Abstandsstreifens 3.

Beim Vergleich der Konturen der Abstandsstreifen 3 mit dem Materialverbleib 8 fällt auf, dass eine v-förmige Kontur vorteilhafter als eine rechteckige Kontur ist. Bei einer v-förmigen Kontur der Abstandsstreifen 3 ist bei gleicher Länge der Kontaktlinie 6 ein viel größerer Materialverbleib 8 zu beobachten, als dies bei einer rechteckigen Kontor zu beobachten ist. Da dieser Materialverbleib zur Stabilisierung des Elektroblechs mit den Abstandsstreifen 3 dient, ist eine v-förmige Kontur einer rechteckigen Kontur vorzuziehen.

Zusätzlich gewährleistet eine v-förmige Kontur für die Abstandsstreifen 3 auch, dass bei einem ausreichend großen Materialverbleib 8 auch eine ausreichende Länge für die Kontaktlinie 6 erreicht werden kann. Dies ist notwendig, da sich die Kontaktlinien 6 der einzelnen Abstandsstreifen 3 eines Elektroblechs zu einer Auflagefläche zusammenaddieren, über welche das daneben angeordnete Elektroblech ohne Abstandsstreifen 3 auf Abstand gehalten wird. Nur wenn die Auflagefläche die Fläche des daneben angeordneten Elektroblechs flächendeckend abdeckt, ist gewährleistet, dass das daneben angeordnete Elektroblech trotz des ausgeübten Drucks auf Abstand gehalten werden kann.

Des Weiteren fällt beim Betrachten der FIG 2 auf, dass die Freistanzungen 7 für die Konturen der Abstandsstreifen 3 so angebracht wurden, dass sich die Kontaktlinie 6 eines Abstandsstreifens 3 in einer anderen Richtung zu der zugehörigen Biegelinie 5 befindet, als Kontaktlinie 6 und Biegelinie 5 des benachbarten Abstandsstreifens 3. Die Abstandsstreifen 3 ragen deshalb für einen Betrachter teilweise in einer Linksdrehung und teilweise in einer Rechtsdrehung aus der Hauptebene des Motorblechs heraus.

Dieses wechselseitige Biegen, bzw. Abkanten der Abstandsstreifen 3 führt auch zu einem besseren Standhalten der Abstandsstreifen 3 in Bezug auf den auf sie ausgeübten Druck im Vergleich mit einseitig gebogenen Abstandsstreifen 3. Da der Biegewinkel der aus der Hauptebene des Elektroblechs herausgebogenen Abstandswinkel in der Regel etwas unter 90° liegt, würden sich die Abstandsstreifen 3 bei einem einseitiges Herausbiegen durch den auf sie wirkenden Druck leichter zurückbiegen lassen, als dies bei wechselseitigem Herausbiegen der Fall ist.

Des Weiteren führt dies auch zu Turbulenzen bei einem Durchströmen von Luft zwischen dem Motorblech mit den Abstandsstreifen 3 und einem daneben angeordneten Motorblech. Über die Turbulenzen innerhalb des Luftzugs ist eine verbesserte Kühlung für die einzelnen Motorbleche gewährleistet.

## Patentansprüche

1. Herstellungsverfahren für ein Elektroblech mit mindestens einem Abstandsstreifen (3) durch
- Heraustrennen von Blechstücken aus einem Blech zur Festlegung einer inneren Umrandung (1)und einer äußeren Umrandung (2) des Elektroblechs,
**gekennzeichnet durch**
- Erzeugen von mindestens einer Schnittlinie (4) in dem Blech, welche eine Kontur des mindestens einen Abstandsstreifens (3) festlegt und
- Herausbiegen des Abstandsstreifens (3) aus der Hauptebene des Elektroblechs.

2. Herstellungsverfahren nach Anspruch 1, wobei die mindestens eine Schnittlinie (4) in dem Blech so ausgebildet ist, dass der mindestens eine Abstandsstreifen (3) über einen als Biegelinie (5) bezeichneten Abschnitt mit dem Elektroblech verbunden bleibt und eine der Biegelinie (5) gegenüber liegende Kontaktlinie (6) an dem Abstandsstreifen (3) entsteht und wobei die Kontaktlinie (6) länger als die Biegelinie (5) des mindestens einen Abstandsstreifen (3) ist.

3. Herstellungsverfahren nach Anspruch 1 oder 2, wobei Schnittlinien (4) zur Festlegung der Konturen mehrerer Abstandsstreifen (3) auf dem Blech so angebracht werden, dass sich die Kontaktlinien (6) in unterschiedlichen Richtungen zu den Biegelinien (5) der zugehörigen Abstandsstreifen (3) befinden.

4. Elektroblech mit
- mindestens einem Abstandsstreifen (3),
**dadurch gekennzeichnet, dass**
- mindestens eine Schnittlinie (4), welche die Kontur des mindestens einen Abstandsstreifens (3) festlegt, in dem Elektroblech ausgebildet ist und
- der mindestens eine Abstandsstreifen (3) aus der Hauptebene des Elektroblechs herausgebogen ist.

5. Elektroblech nach Anspruch 4, wobei die Kontur des mindestens einen Abstandsstreifen (3) so ausgebildet ist, dass eine Kontaktlinie (6) des Abstandsstreifen (3) zur Berührung eines daneben angeordneten Elektroblechs länger ist als ein als Biegelinie (5) bezeichneter Abschnitt, über welchen der Abstandsstreifen (3) mit dem Elektroblech verbunden ist.

6. Elektroblech nach Anspruch 4 oder 5, wobei die Abstandsstreifen (3) abwechseln in einer Links- oder Rechtsdrehung aus der Hauptebene des Elektroblechs herausgebogen sind.

## Claims

1. Production method for an electrical steel sheet having at least one spacing strip (3) by
- cutting out sheet-metal pieces from a metal sheet in order to define an inner boundary (1) and an outer boundary (2) of the electrical steel sheet,
**characterized by**
- production of at least one cut line (4) in the metal sheet which defines a contour of the at least one spacing strip (3), and
- bending the spacing strip (3) out of the main plane of the electrical steel sheet.

2. Production method according to Claim 1, wherein the at least one cut line (4) is formed in the metal sheet such that the at least one spacing strip (3) remains connected to the electrical steel sheet over a section which is referred to as a bending line (5), and a contact line (6) which is opposite the bending line (5) is produced on the spacing strip (3) and wherein the contact line (6) is longer than the bending line (5) of the at least one spacing strip (3).

3. Production method according to Claim 1 or 2, wherein cut lines (4) are applied to the metal sheet in order to define the contours of a plurality of spacing strips (3), such that the contact lines (6) are located in different directions with respect to the bending lines (5) of the associated spacing strips (3).

4. Electrical steel sheet having
- at least one spacing strip (3),
**characterized in that**
- at least one cut line (4), which defines the contour of the at least one spacing strip (3), is formed in the electrical steel sheet, and
- the at least one spacing strip (3) is bent out of the main plane of the electrical steel sheet.

5. Electrical steel sheet according to Claim 4, wherein the contour of the at least one spacing strip (3) is formed such that a contact line (6) of the spacing strip (3) for touching an electrical steel sheet which is arranged alongside it is longer than a section which is referred to as a bending line (5) and via which the spacing strip (3) is connected to the electrical steel sheet.

6. Electrical steel sheet according to Claim 4 or 5, wherein the spacing strips (3) are bent out of the main plane of the electrical steel sheet alternately in a left-handed or right-handed rotation.

## Revendications

1. Procédé de fabrication d'une tôle électrique, comprenant au moins une bande ( 3 ) d'espacement par
- séparation de pièces d'une tôle, pour fixer une bordure ( 1 ) intérieure et une bordure ( 2 ) extérieure de la tôle électrique,
**caractérisé par**
- la production d'au moins une ligne ( 4 ) de coupe dans la tôle, qui fixe un contour de la au moins une bande ( 3 ) d'espacement et
- la courbure de la bande ( 3 ) d'espacement hors du plan principal de la tôle électrique.

2. Procédé de fabrication suivant la revendication 1, dans lequel la au moins une ligne ( 4 ) de coupe dans la tôle est formée, de manière à ce que la au moins une bande ( 3 ) d'espacement reste reliée à la tôle électrique par un segment désigné comme étant une ligne ( 5 ) de courbure, et de manière à ce qu'une ligne ( 6 ) de contact, opposée à la ligne ( 5 ) de courbure, se créée sur la bande ( 3 ) d'espacement, et dans lequel la ligne ( 6 ) de contact est plus longue que la ligne ( 5 ) de courbure de la au moins une bande ( 3 ) d'espacement.

3. Procédé de fabrication suivant la revendication 1 ou 2, dans lequel des lignes ( 4 ) de coupe sont ménagées sur la tôle, pour fixer les contours de plusieurs bandes ( 3 ) d'espacement, de manière à ce que les lignes ( 6 ) de contact se trouvent dans des directions différentes par rapport aux lignes ( 5 ) de courbure des bandes ( 3 ) d'espacement associées.

4. Tôle électrique comprenant
- au moins une bande ( 3 ) d'espacement,
**caractérisée en ce que**
- au moins une ligne ( 4 ) de coupe, qui fixe le contour de la au moins une bande ( 3 ) d'espacement, est formée dans la tôle électrique et
- la au moins une bande ( 3 ) d'espacement est courbée hors du plan principal de la tôle électrique.

5. Tôle électrique suivant la revendication 4, dans laquelle le contour de la au moins une bande ( 3 ) d'espacement est formé de manière à ce que une ligne ( 6 ) de contact de la bande ( 3 ) d'espacement soit, pour toucher une tôle électrique disposée à côté, plus longue qu'un segment désigné par ligne ( 5 ) de courbure, par lequel la bande ( 3 ) d'espacement est reliée à la tôle électrique.

6. Tôle électrique suivant la revendication 4 ou 5, dans laquelle la bande ( 3 ) d'espacement est courbée hors du plan principal de la tôle électrique en alternance en tournant à gauche et en tournant à droite.
